# EUROPEAN PATENT APPLICATION

(11) **EP 0 594 058 A2**
(43) Date of publication of application: **27.04.1994**
(21) Application number: 93116634.2
(22) Date of filing: 14.10.1993
(51) Int. Cl.: G06F 15/64, G06F 15/70

(54) **Image processing apparatus**

(30) Priority: 19.10.1992 JP 279874/92
(71) Applicant: MATSUSHITA ELECTRIC INDUSTRIAL CO., LTD., Kadoma-shi, Osaka-fu, 571 (JP)
(72) Inventor: Takajuki, Morishige, Uji-shi, Kyoto 611 (JP); Masaki, Toyokura, Minou-shi, Osaka 562 (JP)
(74) Representative: Grünecker, Kinkeldey, Stockmair & Schwanhäusser Anwaltssozietät

(57) **Abstract**

An image processing apparatus is presented with less registers.

An output of a counter is inputted to an address converter, the counter output or the address converter output is selected by a third multiplexer and the third multiplexer output is inputted to a memory.

The memory output and the data which is stored in a first register and is one horizontal picture element line in the image data ahead of a certain picture element are operated in a first operator and the memory output and the data which is stored in a second register and is two horizontal picture element lines ahead of the picture element in question are operated in a second operator.

An output of the first operator and an output of the second operator are inputted to a first multiplexer and a second multiplexer, respectively, and the multiplexers select whether accumulation of the outputs of the operators is necessary or not.

## Description

### BACKGROUND OF THE INVENTION

### (1)Field of the Invention

The present invention relates to an image processing apparatus which reads out data from a memory and calculates for the data for an image processing.

### (2)Description of the Prior Art

When data compression is done for a motion picture employing an interlace system, it is necessary to change a way of data compression depending on if the motion picture has a big motion or not. The criterion of the motion can be done by comparing the correlation between the picture element array on a certain horizontal line of the picture and the picture element array on the next horizontal line with the correlation between the picture element array on the same horizontal line and the picture element array on the next next horizontal line. Here, an image processing apparatus comes to be necessary which outputs these correlations for a certain image data stored in a memory.

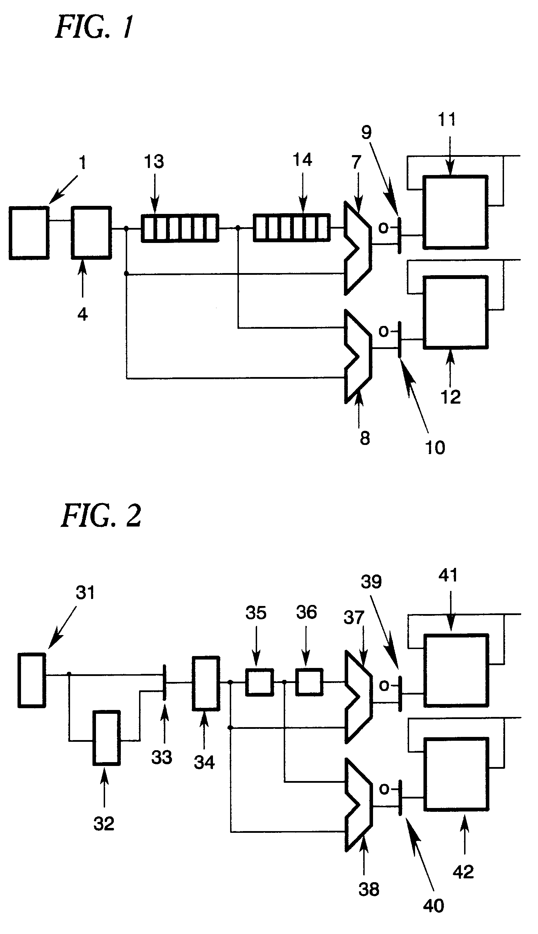

**FIG.1** is a block diagram of an image processing apparatus in accordance with the prior art. **1** is a counter. **4** is a memory which outputs a data corresponding to the address outputted from the counter **1**. **13** is a first register array, in which the same number of registers as that of the picture elements on a horizontal line of the image data line side by side and which is used for storing the data which is one horizontal line ahead of the data outputted from the memory **4**. **14** is a second register array, in which the same number of registers as that of the picture elements on a horizontal line of the image data line side by side as well as the first register array **13** and which is used for storing the data which is two horizontal lines ahead of the data outputted from the memory **4**.

**8** is a second operator which outputs the absolute value of the difference between the picture element data at a certain position and the picture element data of the position which is one horizontal line ahead of the above-mentioned position. **7** is a first operator which outputs the absolute value of the difference between the picture element data at the above-mentioned position and the picture element data of the position which is two horizontal lines ahead of the above-mentioned position.

**9** is a first multiplexer and can switch between the output of the first operator **7** and zero input. **10** is a second multiplexer and can switch between the output of the second operator **8** and zero input.

**11** is a first accumulator for accumulating the output of the first operator **7**. **12** is a second accumulator for accumulating the output of the second operator **8**.

However, the above-mentioned image processing apparatus has a problem that a lot of circuit components and a big area for the components are necessary because of many registers. According to the present invention, an image processing apparatus with less circuit components and narrower area for the components can be realized because of less registers.

### SUMMARY OF THE INVENTION

An image processing apparatus in accordance with the present invention comprises,
an address converter for converts an access direction of the address outputted from a counter from a horizontal direction to a vertical direction of the image data,
a multiplexer for selecting any one between the output of the counter and the output of the address converter,
a memory for storing and outputting picture element data, and
two registers for delaying the picture element data outputted from the memory by one clock and by two clocks.

When writing to the memory, the access direction is changed by the address converter at reading out from the memory, a picture element data corresponding to a certain horizontal line and a picture element data corresponding to the next horizontal line are stored in the two registers, respectively and then the stored data and the data read out from the memory are calculated.

### BRIEF DESCRIPTION OF THE DRAWINGS

**FIG.1** is a block diagram of an image processing apparatus in accordance with the prior art.
**FIG.2** is a block diagram of an image processing apparatus in accordance with an exemplary embodiment of the present invention.
**FIG.3** is a concept diagram of the image data on the memory for explaining performance of an image processing apparatus in accordance with an exemplary embodiment of the present invention.

### DETAILED DESCRIPTION OF THE INVENTION

**FIG.2** is a block diagram of an image processing apparatus in accordance with an exemplary embodiment of the present invention. **31** is a counter for generating a sequential address by a clock signal, i.e. an address which accesses an image data in a horizontal direction every one horizontal line. **32** is an address converter and converts the above-mentioned address which is generated to access the image data horizontally so that the image data is accessed vertically. It can be realized by using a look-up table or a combinational logic circuit. **33** is a third multiplexer and selects an address outputted from the counter **31** or an address outputted from the address converter **32**.

**34** is a memory and outputs an image data corresponding to an address outputted from the third multiplexer **33**. **35** is a first register and stores a picture element data which is one picture element ahead of the picture element data outputted from the memory **34** by delaying the data from the memory **34** by one clock. **36** is a second register and stores a picture element data which is two picture elements ahead of the picture element data outputted from the memory **34** by delaying the data from the first register **35** by further one clock. **37** is a first operator and outputs an absolute value of the difference between the picture element data outputted from the memory **34** and the picture element data which is two picture elements ahead and is outputted from the second register **36**. **38** is a second operator and outputs an absolute value of the difference between the picture element data outputted from the memory **34** and the picture element data which is one picture element ahead and is outputted from the first register **35**.

**39** is a first multiplexer and selects an output of the first operator **37** or a zero input. **41** is a first accumulator and accumulates the output of the first multiplexer **39**. **40** is a second multiplexer and selects an output of the second operator **38** or zero input. **42** is a second accumulator and accumulates the output of the second multiplexer **40**.

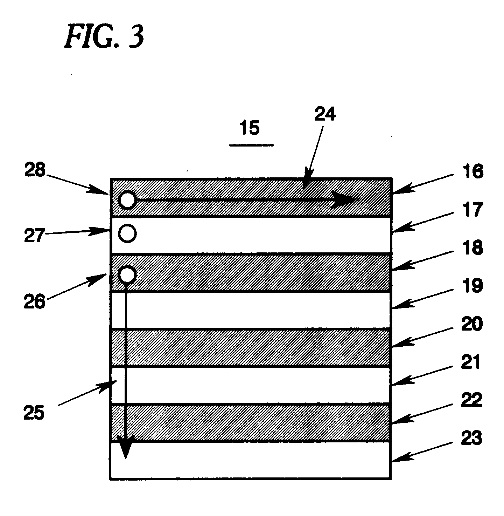

**FIG.3** illustrates a portion of the image data in the memory **34** and is composed of horizontal eight picture elements and vertical eight picture elements. When the third multiplexer **33** selects an output of the counter **31** and outputs it, the image data is written in the memory **34**. In this case, the access direction of the image data **15** is the direction indicated by an arrow mark **24** (horizontal) in **FIG.3**. When the third multiplexer **33** selects an output of the address converter **32** and outputs it, the image data is written in the memory **34** and then read out from the memory **34** for calculation. In this case, the access direction of the image data **15** is the direction indicated by an arrow mark **25** (vertical).

Thus, for a certain picture element **26**, the picture element **27** which is one picture element line above (ahead of) the picture element **26** is always stored in the register **35** and the picture element **28** which is two picture element lines ahead of the picture element **26** is always stored in the register **36**. Therefore, no more extra registers than these two registers are necessary.

The second operator **38** outputs an absolute value of the difference between the data of a certain picture element and the data of the picture element which is one picture element line above (ahead of) the picture element in question. When the picture element in question is on the first picture element line **16**, the second multiplexer **40** judges that there is no need to accumulate the output and selects zero input and outputs it. Thus, an accumulation of the absolute value of the difference between every picture element **16** and **17**, **17** and **18**, **18** and **19**, **19** and **20**, **20** and **21**, **21** and **22**, and **22** and **23** is obtained while the whole image data **15** is accessed.

The first operator **37** outputs an absolute value of the difference between the data of a certain picture element and the data of the picture element which is two picture element lines ahead of the picture element. When the picture element in question is on the first picture element line **16** or the second picture element line **17**, the first multiplexer **39** judges that there is no need to accumulate the output and selects zero input and outputs it. Thus, an accumulation of the absolute value of the difference between every picture element **16** and **18**, **17** and **19**, **18** and **20**, **19** and **21**, **20** and **22**, and **21** and **23** is obtained while the whole image data **15** is accessed.

According to the exemplary embodiment of the present invention, it is realized that the number of registers which is necessary for storing the picture element data is only two, independent of the number of picture elements on one horizontal line of the image data, by providing an address converter **32**.

In the exemplary embodiment, the size of the image data is treated as eight picture elements times eight picture elements, but the same effect is obtained for any size of an image data.

As explained above, an advantage of this invention is that an image processing apparatus with less registers compared with that in accordance with the prior art can be realized, because by providing an address converter and a multiplexer between a counter and a memory, the access direction to the address is changed and the picture element data on a certain line and the corresponding picture element data on the next line can be stored in only two registers.

The invention may be embodied in other specific form without departing from the spirit or essential characteristics thereof. The present embodiment is therefore to be considered in all respects as illustrative and not restrictive, the scope of the
invention being indicated by the appended claims rather than by the foregoing description and all changes which come within the meaning and range of equivalency of the claims are therefore intended to be embraced therein.

## Claims

1. An image processing apparatus comprising:
a counter for generating a sequential address by a clock signal,
an address converter for converting an access direction of said sequential address outputted from said counter,
a third multiplexer for selecting the address outputted from said counter or the address outputted from said address converter and for outputting the selected data,
a memory for writing and reading the data corresponding to the address outputted from said third multiplexer according to the access direction of the address outputted from said third multiplexer,
a first register for delaying the data outputted from said memory by one clock,
a second register for delaying the data outputted from said first register by further one clock,
a first operator for operating the data outputted from said memory and the data outputted from said first register,
a second operator for operating the data outputted from said memory and the data outputted from said second register,
a first multiplexer for selecting the output data from said first operator when it is necessary to accumulate the output data of said first operator and for selecting zero when it is unnecessary to accumulate the output data of said first operator and for outputting the selected data,
a second multiplexer for selecting the output data from said second operator when it is necessary to accumulate the output data of said second operator and for selecting zero when it is unnecessary to accumulate the output data of said second operator and for outputting the selected data,
a first accumulator for accumulating the data outputted from said first multiplexer, and
a second accumulator for accumulating the data outputted from said second multiplexer.
